Europäisches Patentamt

European Patent Office

Office européen des brevets

(19)

(11) Numéro de publication: **0 275 858**
**A1**

## DEMANDE DE BREVET EUROPEEN

(21) Numéro de dépôt: 87870194.5

(22) Date de dépôt: 22.12.87

(51) Int. Cl.4: **G09F 13/18** , F21V 7/00

(30) Priorité: **30.12.86 BE 217655**

(43) Date de publication de la demande:
**27.07.88 Bulletin 88/30**

(84) Etats contractants désignés:
**CH DE ES FR GB IT LI NL SE**

(71) Demandeur: **Benmouna, Abdennasser**
**Rue de Souvret 56**
**B-4200 Sclessin(BE)**

Demandeur: **Sensi, Armand**
**Rue de Saive 6**
**B-4520 Wandre(BE)**

(72) Inventeur: **Benmouna, Abdennasser**
**Rue de Souvret 56**
**B-4200 Sclessin(BE)**
Inventeur: **Sensi, Armand**
**Rue de Saive 6**
**B-4520 Wandre(BE)**

(74) Mandataire: **Vanderperre, Robert et al**
**Bureau VANDER HAEGHEN 63 Avenue de la**
**Toison d'Or**
**B-1060 Bruxelles(BE)**

(54) **Caisson lumineux.**

(57) Un corps non opaque constitué d'au moins un élément (1) de section transversale triangulaire rectangle a une première face formant un côté de l'angle droit qui sert de face frontale, et une source de lumière est montée le long de la seconde face de l'élément, perpendiculaire à la première face,de manière à projeter sur la seconde face un flux de lumière dirigé sur et réfléchi par la troisième face oblique de l'élément.

FIG. 2

EP 0 275 858 A1

## Caisson lumineux

La présente invention concerne un caisson lumineux pour la présentation ou l'exposition d'une affiche ou d'un document quelconque.

Les dispositifs connus pour éclairer une affiche par le dos utilisent un éclairement diffus dans un espace clos situé derrière le support de l'affiche. Il se produit ainsi une grande perte d'énergie lumineuse au détriment de la luminosité ou de la brillance que l'on pourrait produire sur l'affiche.

L'invention a pour but d'améliorer sensiblement la luminosité et la brillance d'éclairement sur une affiche ou un document quelconque.

Ce but est atteint selon l'invention grâce à un caisson lumineux comprenant un corps en maitère non opaque constitué au moins d'un élément de section transversale triangulaire rectangle, une première face formant un côté de l'angle droit servant de face frontale, une source de lumière montée le long de la seconde face de l'élément perpendiculaire à la première face de manière à projeter sur la seconde face un flux de lumière dirigé sur et réfléchi par la troisième face de l'élément.

Un mode d'exécution exemplaire du dispositif selon l'invention est décrit dans ce qui suit à l'aide des dessins ci-annexés dans lesquels:

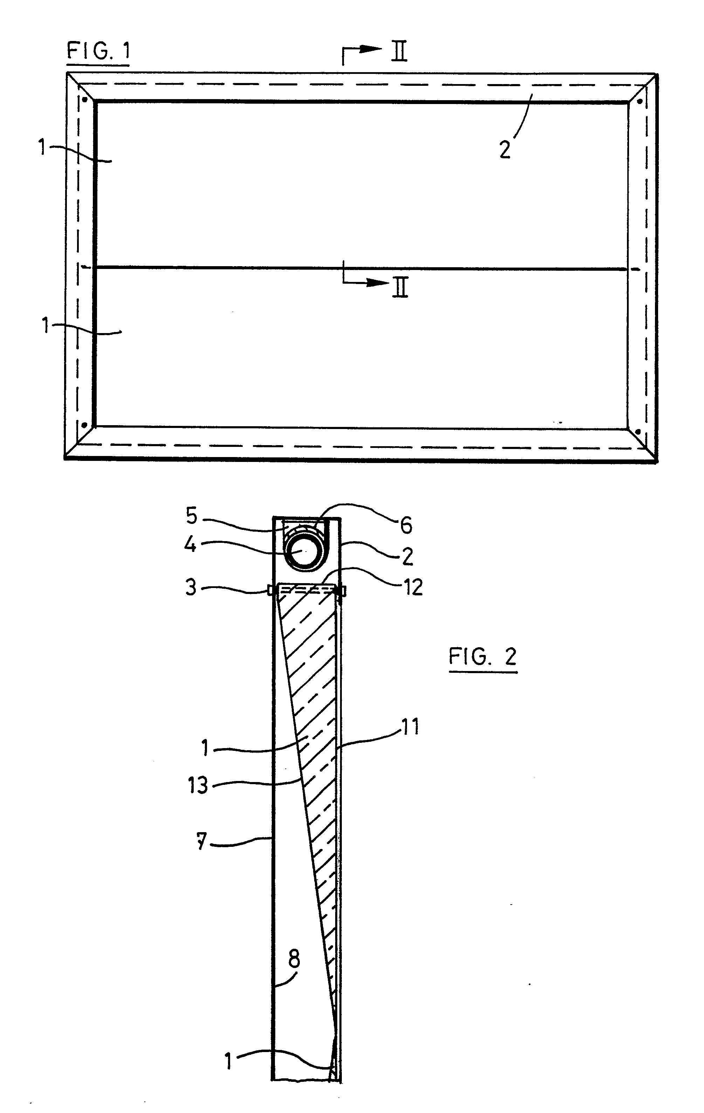

. la figure 1 est une vue en élévation de face,

. la figure 2 est une vue en coupe suivant la ligne II-II de la figure 1.

Se reportant aux dessins, on voit un caisson exemplaire comprenant essentiellement un corps 1 en matière non opaque telle que plexiglas, verre, polyester, polycarbonate, par exemple. Le corps 1 est constitué ici de deux éléments 1 ayant une section transversale de forme générale triangulaire rectangle. Les éléments non opaques peuvent être pleins comme montré à titre d'exemple dans les dessins, ou être creux, l'essentiel étant qu'ils présentent trois faces extérieures 11, 12, 13 délimitant en coupe un triangle rectangle. Les deux éléments 1 sont disposés en opposition c'est-à-dire avec chacun une face 11 formant un côté de l'angle droit située dans le même plan que la face correspondante 11 de l'autre élément 1 et avec l'autre face 12 formant un côté de l'angle droit constituant un bord du corps non opaque. Le corps 1 pourrait aussi être constitué d'un seul élément.

Le corps non opaque 1 est ceinturé d'une armature 2 fixée sur le ou les éléments 1 moyen de vis 3, cette armature formant le long de la face 12 de chaque élément non opaque 1, un logement pour le montage d'une source de lumière 4. Dans l'exemple illustré, la source de lumière est constituée d'un tube fluorescent 4 monté sur un support 5 fixé sur l'armature. La partie de la surface extérieure du tube 4, tournée vers l'extérieur, est recouverte d'un élément réflecteur 6, par exemple un revêtement de couleur blanche. L'armature 2 se prolonge en regard des faces obliques 13 des éléments 1 par une tôle 7 dont la face intérieure 8 peut être rendue réfléchissante, par exemple par un revêtement de peinture blanche.

La face oblique 13 de chaque élément non opaque 1 est avantageusement polie. La face 11 de chaque élément 1, qui constitue la face avant du caisson, est avantageusement dépolie.

Lorsqu'on désire présenter un document à la vision par transparence, on l'applique et fixe le document sur la face avant 11 ou sur une face oblique 13 du corps non opaque 1 et on allume la source de lumière 4. Le flux de lumière pénétrant dans les éléments 1 par les faces 12 se trouve réfléchi sur la face oblique 13 de l'élément 1 correspondant en direction de la face avant 11. Le document se trouve ainsi éclairé de façon intense grâce aux rayons lumineux dirigés de façon homogène et la vision de ce document est d'une grande luminosité et d'une grande brillance.

## Revendications

1. Caisson lumineux pour la vision d'un document, caractérisé en ce qu'il comprend un corps non opaque constitué d'au moins un élément (1) de section transversale triangulaire rectangle, une première face (11) formant un côté de l'angle droit servant de face frontale;
une source de lumière (4) montée le long de la seconde face (12) de l'élément (1), perpendiculaire à la première face (11), de manière à projeter sur la seconde face (12) un flux de lumière dirigé sur et réfléchi par la troisième face (13) de l'élément (1).

2. Dispositif selon la revendication 1, caractérisé en ce que la première face (11) de l'élément de matière non opaque (1) a une surface extérieure dépolie.

3. Dispositif selon la revendication 1 ou 2, caractérisé en ce que la troisième face (13) de l'élément non opaque (1) a une surface extérieure polie.

4. Dispositif selon la revendication 1, caractérisé en ce que la source de lumière (4) porte un élément réflecteur (6) du côté opposé à celui qui est tourné vers la seconde face (12) de l'élément non opaque (1).

5. Dispositif selon la revendication 1, caractérisé en ce que le corps de matière non opaque (1) est ceinturé d'une armature (2) se prolongeant par une tôle (7) qui s'étend du côté opposé à celui de la première face (11).

6. Dispositif selon la revendication 5, caractérisé en ce que la face (8) de la tôle (7), qui est tournée vers l'élément non opaque (1) est recouverte d'un revêtement réfléchissant.

7. Dispositif selon la revendication 1, 2, 3, 4, 5, ou 6, caractérisé en ce qu'il comprend deux éléments de matière non opaque (1) disposés de manière que leurs premières faces (11) s'étendent dans le même plan, les secondes faces (12) des deux éléments constituant deux bords opposés dudit corps non opaque.

8. Dispositif selon l'une quelconque des revendications précédentes, caractérisé en ce que l'élément non opaque (1) est creux.

FIG. 1

FIG. 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-E- 31 104 (E. PORTHAL)<br>* Page 1, lignes 14-34; figures 1,2 * | 1,5,7 | G 09 F 13/18<br>F 21 V 7/00 |
| X | DE-U-8 522 545 (F. VINTHER)<br>* Revendications 1,3; page 4, alinéa 2 - page 5, alinéa 1; figures 1-5 * | 1 | |
| A | | 2 | |
| X | EP-A-0 167 289 (WACOM CO. LTD)<br>* Revendications 1-3; page 6, ligne 6 - page 8, ligne 12; figures 1,3,4 * | 1,7 | |
| A | | 2,4-6 | |
| X | US-A-3 464 133 (M.C.K. DE PORAY)<br>* Colonne 2, lignes 13-65; colonne 3, lignes 37-45; figures 1-3,8 * | 1,7,8 | |
| A | | 4 | |
| A | WO-A-8 203 442 (TELDIX)<br>* Revendications 1,3,7,8; page 3, ligne 20 - page 4, ligne 9; page 5, lignes 1-18; figures 2a-2b * | 1,4 | |

DOMAINES TECHNIQUES RECHERCHES (Int. Cl.4)

G 09 F
F 21 V
F 21 S
G 02 B

Le présent rapport a été établi pour toutes les revendications

| Lieu de la recherche | Date d'achèvement de la recherche | Examinateur |
|---|---|---|
| LA HAYE | 12-04-1988 | FRANSEN L.J.L. |